Europäisches Patentamt

(19) European Patent Office

Office européen des brevets

(11) Numéro de publication : **0 252 856 B1**

(12) **FASCICULE DE BREVET EUROPÉEN**

(45) Date de publication du fascicule du brevet :
30.08.89

(21) Numéro de dépôt : 87420153.6

(22) Date de dépôt : 12.06.87

(51) Int. Cl.⁴ : **F 27 B 13/02, F 23 N 5/00**

(54) Dispositif et procédé d'optimisation de la combustion dans les fours à chambres pour la cuisson de blocs carbones.

(30) Priorité : 17.06.86 FR 8608987
14.04.87 FR 8705466

(43) Date de publication de la demande :
13.01.88 Bulletin 88/02

(45) Mention de la délivrance du brevet :
30.08.89 Bulletin 89/35

(84) Etats contractants désignés :
AT CH DE ES FR GB GR IT LI NL SE

(56) Documents cités :
EP–A– 0 133 842
FR–A– 540 621
FR–A– 2 303 283
GB–A– 2 129 918
US–A– 4 043 743

(73) Titulaire : **ALUMINIUM PECHINEY**
**23, rue Balzac**
**F-75008 Paris Cédex 08 (FR)**

(72) Inventeur : **Dreyer, Christian**
**327 rue St Pierre**
**F-73300 St Jean De Maurienne (FR)**
Inventeur : **Thomas, Jean-Claude**
**31 rue des Ursulines**
**F-78100 St Germain En Laye (FR)**
Inventeur : **Vanvoren, Claude**
**L'Echaillon - Hermillon**
**F-73300 St Jean De Maurienne (FR)**

(74) Mandataire : **Pascaud, Claude et al**
**PECHINEY 28, rue de Bonnel**
**F-69433 Lyon Cédex 3 (FR)**

## Description

Domaine technique de l'invention

L'invention concerne un dispositif et un procédé d'optimisation de la combustion dans les fours à chambres ouvertes pour la cuisson des blocs carbonés destinés notamment, mais non exclusivement, aux cuves de production d'aluminium par le procédé Hall-Héroult, mais aussi, de façon générale, à l'électrométallurgie.

Etat de la technique

Dans tout ce qui suit, nous désignerons par l'expression « bloc carboné », tout produit obtenu par mise en forme d'une pâte carbonée, et destiné, après cuisson, à être utilisé dans des fours d'électrométallurgie.

Par exemple, les anodes carbonées destinées aux cuves de production d'aluminium par électrolyse d'alumine dissoute dans de la cryolithe fondue sont obtenues par mise en forme d'une pâte carbonée résultant du malaxage, à environ 120 à 200 °C, d'un mélange de brai et de coke broyé. Après mise en forme, les anodes sont cuites pendant une centaine d'heures à une température de l'ordre de 1 100 à 1 200 °C. D'autres types de blocs carbonés sont obtenus par le même procédé.

Bien qu'il existe quelques procédés de cuisson continue en four tunnel, une grande partie des installations de cuisson en service dans le monde à ce jour sont du type « four à chambre » dits « à feu tournant » (ring furnace) ou encore « à avancement de feu ». Ces fours se divisent eux-mêmes en deux catégories, les fours fermés et les fours dits « à chambres ouvertes » qui sont les plus utilisés, décrits notamment dans le brevet US-2 699 931. La présente invention s'applique plus particulièrement aux fours à chambres ouvertes. Ce type de four comporte deux travées parallèles dont la longueur totale peut atteindre plus d'une centaine de mètres.

Chaque travée comporte une succession de chambres, séparées par des murs transversaux et ouvertes à leur partie supérieure pour permettre le chargement des blocs crus et le déchargement des blocs cuits refroidis. Chaque chambre comporte, disposées parallèlement au grand axe du four, un ensemble de cloisons creuses, à parois minces, dans lesquelles vont circuler les gaz chauds assurant la cuisson, ces cloisons alternant avec des alvéoles dans lesquelles on empile les blocs à cuire noyés dans une poussière carbonée (coke, anthracite ou résidus carbonés broyés ou tout autre matériau de garnissage pulvérulent). Il y a par exemple 6 alvéoles et 7 cloisons alternées par chambre.

Les cloisons creuses sont munies, à leur partie supérieure, d'ouvertures obturables dites « ouvreaux » ; elles comportent en outre des chicanes pour allonger et répartir plus uniformément le trajet des gaz de combustion.

Le chauffage du four est assuré par des rampes de brûleurs, ayant une longueur égale à la largeur des chambres, et dont les injecteurs viennent se placer sur les ouvreaux des chambres concernées. En amont des brûleurs (par rapport au sens d'avancement du feu), on dispose une pipe de soufflage d'air de combustion et, en aval, une pipe d'aspiration des gaz brûlés. Le chauffage est assuré à la fois par la combustion du combustible injecté (gaz ou fuel) et par celle des vapeurs de brai émises par les blocs carbonés en cours de cuisson.

Au fur et à mesure que la cuisson se produit, on fait avancer par exemple toutes les 24 heures, l'ensemble pipe de soufflage-brûleurs-pipe d'aspiration, chaque chambre assurant ainsi, successivement, les fonctions de chargement des blocs carbonés crus, préchauffage naturel (par les gaz de combustion), préchauffage forcé et cuisson à 1 100-1 200° (zone dite plein feu), refroidissement des blocs carbonés (et préchauffage des gaz de combustion), déchargement des blocs carbonés cuits, réparations éventuelles et reprise d'un nouveau cycle.

Problème technique à résoudre

La qualité des blocs carbonés (anodes, cathodes, garnissages latéraux) étant un des éléments essentiels dans la technique et l'économie du procédé Hall-Héroult, il est nécessaire d'optimiser les conditions de cuisson, à la fois pour obtenir la qualité désirée et pour réduire la consommation d'énergie qui est de l'ordre de 750 à 800 Thermies par tonne d'anodes (soit environ 870 à 930 kwh/tonne).

Une bonne conduite du feu permet d'aboutir au niveau de chaque chambre à la température de cuisson programmée en évitant la formation de fumées et ce, dans des conditions économiques optimales (bonne tenue et longue durée de vie des réfractaires des cloisons, minimum de consommation de combustible).

Le but que l'on se fixe est de faire suivre aux blocs carbonés une courbe donnée de montée en température, tout en respectant les différentes phases de la cuisson.

En fonction de cette courbe, on détermine une courbe théorique de température des gaz dans les cloisons des chambres en plein feu, qui doit tenir compte de l'apport de calories dû aux matières volatiles. Cette courbe comprend généralement une partie linéaire jusqu'à environ 1 200 °C, puis un palier à cette température.

Par exemple, la température finale de cuisson des anodes, comprise entre 1 100 et 1 200 °C, dépend de la nature des matières premières et on la règle afin de donner à l'anode ses caractéristiques optimales.

La combustion du gaz ou du fuel dans les zones de préchauffage forcé et de plein feu est assurée au moyen d'installations automatiques pilotant les brûleurs à partir des mesures de températures dans les cloisons.

A l'inverse, le préchauffage naturel, qui dépend largement du réglage de la ventilation, reste souvent une opération de contrôle manuel.

. La ventilation des cloisons est ajustée en règle générale de façon que la dépression dans le four reste constante tout au long de chaque période. Les conducteurs de four corrigent cette valeur de consigne de la dépression en plus ou en moins, en fonction des observations faites au cours des visites de contrôle des cloisons :

— retard ou avance de chauffage d'une file de cloisons par rapport aux autres,
— présence de fumées,
— état du dégazage,
— incidents de combustion (« champignons »).

Trop faible, la dépression n'induit pas une évacuation suffisante des fumées de combustion des hydrocarbures (fuel ou gaz, matières volatiles du brai). Trop forte, la dépression entraîne une admission excessive d'air parasite par infiltration. Dans les deux cas, le bilan thermique du four se détériore notablement, dans les deux cas également des fumées d'imbrûlés peuvent se former (par défaut d'air dans le premier cas, par étalement de la zone de combustion vers des zones trop froides dans le second cas).

L'application d'une ventilation correcte optimisant les performances des fours résulte donc d'un compromis dépendant de l'expérience des conducteurs de four, associée à de fréquentes observations.

Afin d'éviter tout retard dans la montée en température des anodes au niveau du préchauffage, retard qu'il est difficile et coûteux de rattraper, la tendance de l'exploitant est d'appliquer des dépressions plus fortes que nécessaire. D'autre part, les apports de combustibles étant cycliques (émission de matières volatiles, apport de fuel ou gaz), les besoins d'air de combustion sont variables et devraient conduire à une modulation des débits et des dépressions, ce qui est, en pratique, impossible à réaliser manuellement de façon optimale et reproductible.

## Etat de l'art antérieur

Dans la demande de brevet européen EP-A-133 842, on a décrit un procédé de conduite d'un four à chambres pour la cuisson d'anodes carbonées, comportant au moins deux travées parallèles réunies, à leurs extrémités, par des canalisations de répartition du gaz, munies de volets motorisés pour le réglage de débit, qui permet de contrôler la température et la dépression dans le four, mais il ne constitue pas véritablement un procédé d'optimisation permanente de la combustion.

## Objet de l'invention

L'objet de l'invention est un dispositif et un procédé permettant de réguler la combustion en agissant sur le débit des fumées aspirées dans chaque ligne de cloison par action sur les volets placés sur chaque ajutage de la pipe d'aspiration placée en aval des brûleurs en limitant, en outre, la surpression dans les cloisons de la chambre située en amont de la zone de plein feu, et en ajustant le débit d'air de combustion injecté par la pipe de soufflage.

La demanderesse a trouvé que le paramètre principal le plus fiable pour piloter cette régulation était l'opacité des fumées mesurées par réflexion d'une source lumineuse sur les particules solides en suspension dans la fumée et non pas, comme en opacimétrie classique, par simple transmission de la lumière au travers de la fumée.

De façon plus précise, un premier objet de l'invention est un dispositif de régulation de la combustion dans un four à chambres pour la cuisson de blocs carbonés, dispositif dans lequel chaque ajutage de la pipe d'aspiration et de la pipe de soufflage est muni d'un volet d'obturation mobile, commandé par un moteur, d'un moyen de mesure de la dépression dans la cloison chauffante correspondante, au niveau de la zone de préchauffage, d'un moyen de mesure de l'opacité, par réflexion, de la fumée sortant de chaque cloison chauffante, d'un moyen de mesure de la température, distinct de celui utilisé pour les dispositifs automatiques pilotant les brûleurs, et d'un moyen pour asservir la position du volet d'obturation de la pipe d'aspiration, donc le débit dans chaque cloison, à la mesure combinée de l'opacité de la fumée, de la température et de la dépression.

En outre, en vue d'optimiser le réglage de la combustion, on prévoit un dispositif de mesure de la surpression dans les cloisons de la chambre située en amont de la zone plein feu, associé à un moyen de comparaison de cette mesure avec une valeur de consigne, et d'autre part, un moyen de faire varier le débit d'air de combustion, qui consiste à agir sur la vitesse du ventilateur injectant cet air dans la pipe de soufflage, ainsi qu'un moyen de mesure de ce débit d'air.

Un second objet de l'invention est un procédé d'optimisation de la combustion dans les fours à chambre pour la cuisson d'anodes mettant en œuvre le dispositif décrit, et selon lequel on asservit la position des volets d'obturation mobiles de la pipe d'aspiration à des mesures de l'opacité des fumées et de la dépression dans les chambres de préchauffage, de façon à fonctionner avec la dépression minimale compatible avec une bonne combustion et la courbe programmée de montée en température des gaz de combustion et à rester au minimum d'opacité des fumées. Ce procédé est défini de façon plus précise dans les revendications.

En outre, et dans le même but d'optimiser la combustion :

— d'une part on maintient une surpression contrôlée dans les cloisons de la chambre située en arrière (en amont) de la zone de plein feu, de manière à ne pas perturber l'injection de combustible (liquide ou gazeux) par les brûleurs ; pour cela on agit sur les volets d'obturation de la pipe de soufflage ;

— d'autre part, on ajuste le débit de gaz comburant injecté par la pipe de soufflage (alimentée par un ventilateur à débit réglable), de façon à obtenir la combustion complète du combustible, constitué en partie par le carburant injecté ·dans les brûleurs et en partie par les fractions volatiles du brai émises par les blocs carbonés en cours de cuisson.

Description des figures

Les figures 1 à 8 illustrent l'invention.

Les figures 1 (en coupe) et 2 (en vue partiellement écorchée) rappellent, pour la bonne compréhension de l'invention, la structure générale des fours à chambres ouvertes à « avancement de feu ».

La figure 3 montre, en vue en plan schématisée, la structure d'un four à chambres ouvertes selon l'invention.

La figure 4 montre, en coupe, la mise en œuvre pratique de l'invention sur la pipe d'aspiration, dans un premier mode de mise en œuvre.

La figure 5 montre le dispositif de mesure d'opacité des fumées.

Les figures 6 et 7 montrent deux variantes de mise en œuvre de l'opacimétrie des fumées.

La figure 8 schématise l'évolution, en fonction du temps, de la température TA des anodes en cours de cuisson du dégagement de matières volatiles émises par ces anodes et de la consommation en oxygène pour brûler le combustible injecté par les brûleurs plus les matières volatiles.

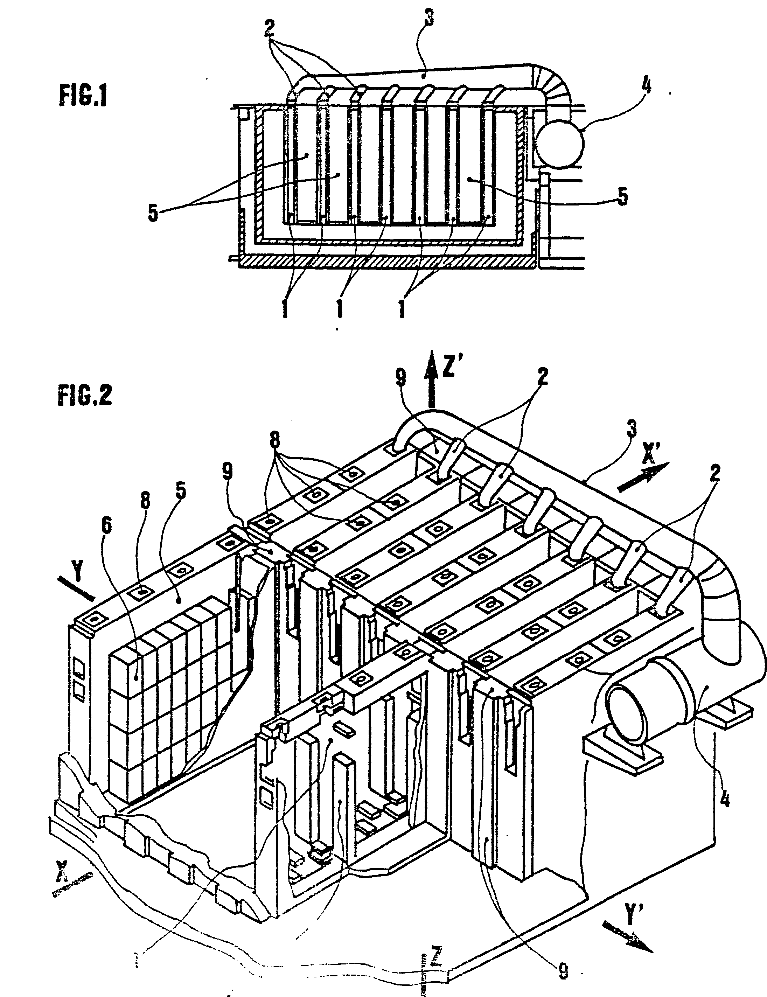

Sur la coupe de la figure 1, on voit les cloisons 1 reliées à leur partie supérieure par des ajutages 2 à la pipe 3, elle-même raccordée au collecteur général 4. Les pipes de soufflage et d'aspiration qui ont pratiquement la même structure peuvent être, selon les cas, raccordées aux ouvreaux des chambres ou aux ouvreaux des murs transversaux, comme nous l'avons décrit dans notre brevet français FR 2 535 834 (= GB 2 129 918). Dans les alvéoles 5 sont disposés les blocs carbonés par exemple les anodes 6, visibles sur l'écorché de la partie gauche de la figure 2, enrobés dans un granulé carboné non représenté.

Les chicanes 7 des cloisons chauffantes ont pour but d'allonger le trajet des gaz chauds et par là même d'homogénéiser la température des produits dans les alvéoles 5.

A la partie supérieure des chambres (ou des murs transversaux), les ouvreaux obturables 8 permettent la mise en place des rampes de brûleurs (non représentées), des pipes de soufflage et d'aspiration d'air, et dans certains cas, d'appareils de mesure (thermocouples, déprimomètres).

Les chambres successives sont séparées par des murs transversaux 9. Le grand axe du four est indiqué par la ligne XX'.

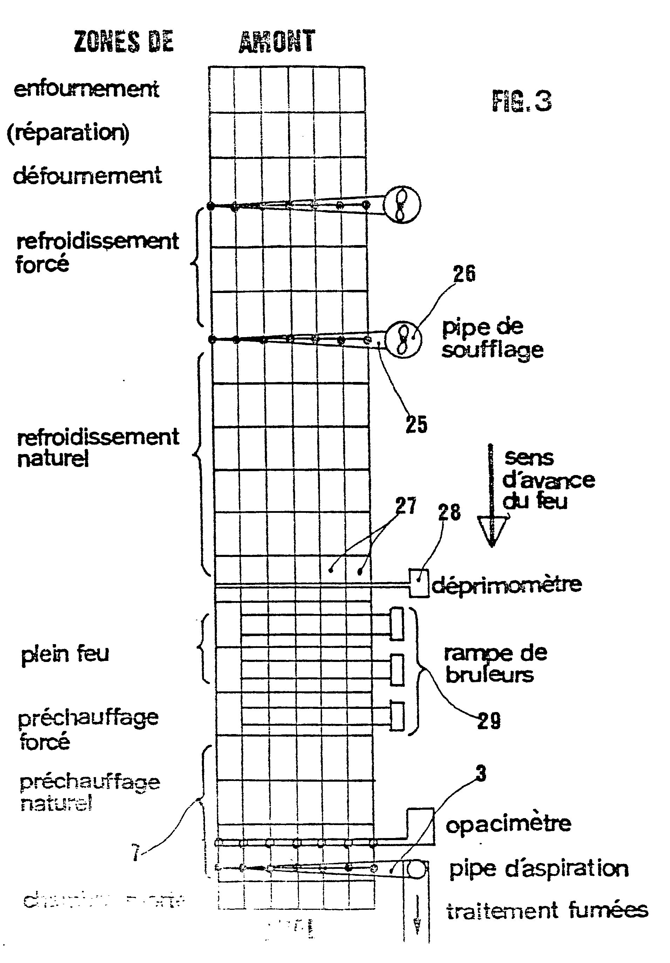

Selon l'invention, on dispose sur chaque ajutage 2 entre la pipe d'aspiration 3 et l'ouvreau correspondant 8 un volet mobile 11 commandé par un moteur 12 (le terme « moteur » étant pris ici dans son sens le plus large, englobant par exemple, une commande par vérin hydraulique ou mécanique motorisé). Cette pipe d'aspiration 3 est placée sur la première chambre en préchauffage naturel (fig. 2 et 3).

Les ajutages de la pipe de soufflage 25 sont également équipés de volets mobiles motorisés, pour un but qui sera précisé un peu plus loin.

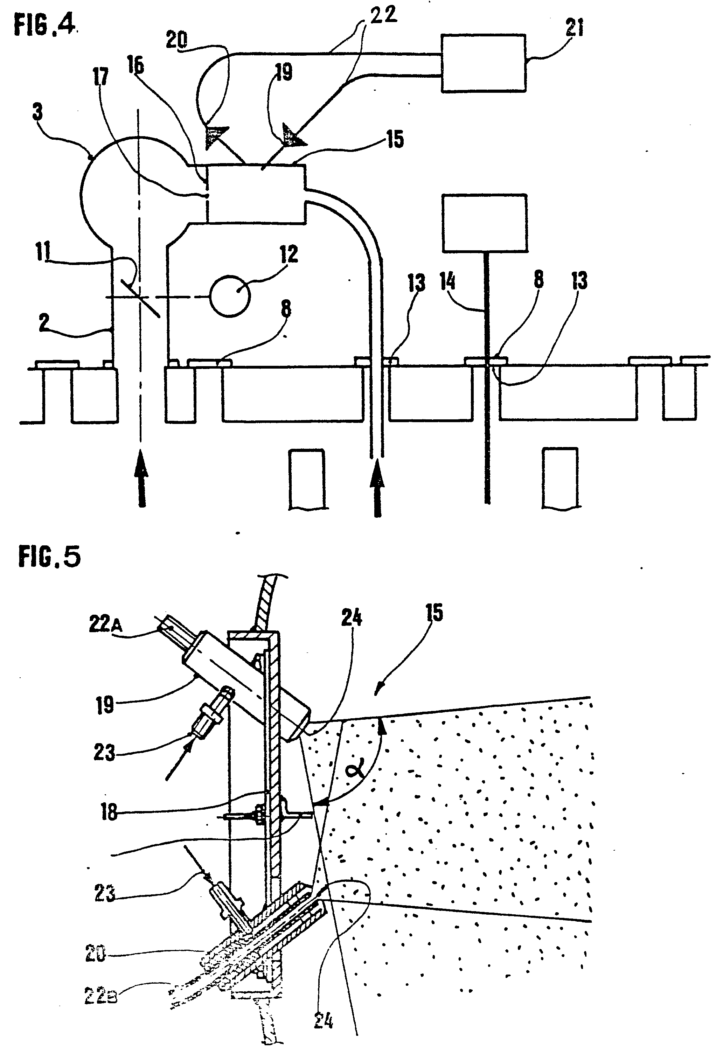

La mesure d'opacité des fumées pourrait, en théorie, être effectuée directement dans l'ajutage 2. Mais, en raison des turbulences de fumées à ce niveau qui rendent difficiles des mesures stables et reproductibles, on a choisi d'effectuer le prélèvement de fumées, soumis à opacimétrie, dans un orifice particulier 13, tels que ceux qui sont prévus pour introduire les sondes de mesures de température ou de dépression 14, ce prélèvement étant conduit dans une chambre de mesure 15, reliée à la pipe d'aspiration 3 par une cloison 16 percée d'un orifice 17 formant diaphragme (fig. 4).

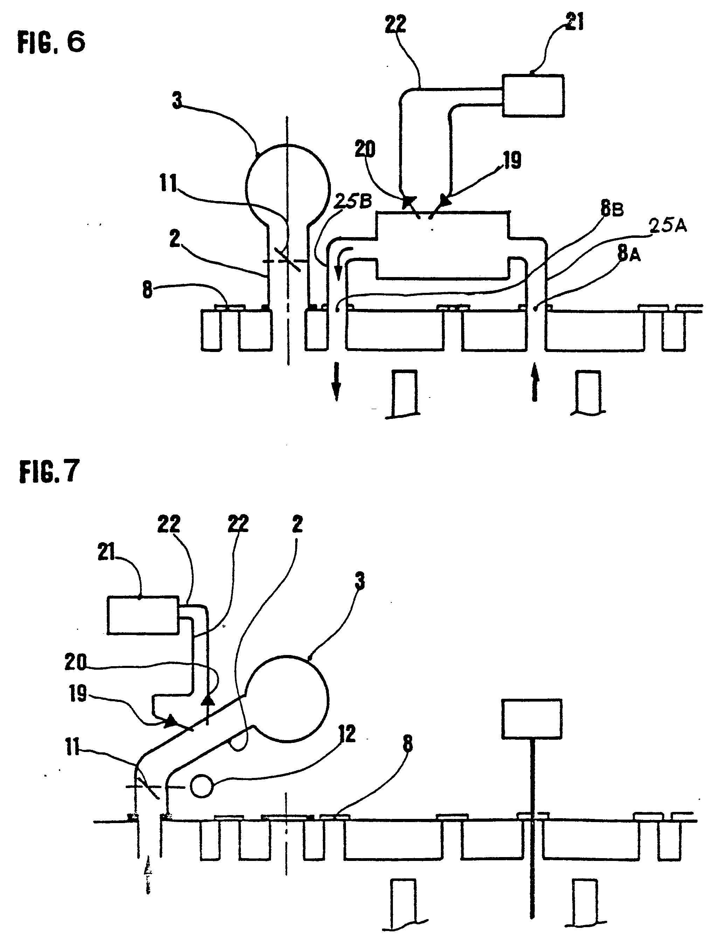

Un autre moyen de ne pas être gêné par les turbulences des fumées consiste à utiliser, comme chambre de mesure, une chambre auxiliaire 18, fig. 6, dans laquelle une partie du flux des fumées est dérivée, à condition de brancher · l'entrée sur un ouvreau 8A correspondant à une zone de flux ascendant, et la sortie sur un ouvreau 8B correspondant à un flux descendant.

La figure 7 montre un autre mode de réalisation dans lequel l'ajutage 2 a une longueur droite suffisante pour que l'on puisse admettre que les turbulences y sont relativement limitées et ne perturbent pas la mesure d'opacité.

Les sondes de mesure sont placées sur une platine rigide formant la partie supérieure de la chambre de mesure.

L'opacimétrie comporte :
.une sonde émettrice 19
une sonde réceptrice 20
un coffret de mesure 21
une liaison par fibres optiques 22 entre chaque sonde 19, 20 et le coffret de mesure 21.

La sonde émettrice 19 est reliée, par la fibre optique 22A à une source lumineuse émettant en lumière visible modulée, placée dans le coffret 21.

L'axe de la sonde émettrice 19, qui illumine la fumée dans la chambre, fait avec le plan de la paroi de la chambre 18 un angle d'environ 45°. Il en est de même pour la sonde réceptrice 20 qui est disposée à une dizaine de centimètres de la sonde émettrice.

Les axes des deux sondes forment entre eux un angle d'environ 80°. De cette façon, la lumière émise par la sonde 19 ne peut en aucune façon atteindre directement la sonde 20 qui ne capte que la lumière réfléchie par les particules solides en suspension dans la fumée (imbrûlés et poussière), et qui sont symbolisées par les petits points noirs sur la figure 5 (cette valeur de 80° est donnée à titre indicatif).

Cette lumière réfléchie est conduite, par la fibre optique 22B, vers le coffret 21, où elle est détectée par des photodiodes. Le signal électrique modulé est débarrassé d'une éventuelle composante continue parasite puis converti linéairement en un signal de sortie analogique (ou digital) qui, après traitement et mise au niveau requis, pilote le moteur 12 commandant la position du volet mobile 11 placé dans l'ajutage 2. En outre, ce même signal peut être traduit, après étalonnage préalable, en milligrammes de particules solides par m³ de fumée.

La régulation, selon ce principe, de l'ensemble du four à chambre, implique que ce dispositif soit installé sur chacune des sorties de cloisons chauffantes, qui peuvent être, par exemple, au nombre de 7 (cas des figures 2 et 3).

Le coffret de mesure 21 peut être commun à l'ensemble de tous les opacimètres, chaque voie pouvant être dotée d'un détecteur-amplificateur séparé, ou bien d'un unique détecteur-amplificateur multiplexé.

Compte tenu de la température élevée qui règne aux environs du four, le coffret 21 doit être disposé à une certaine distance, qui peut être de l'ordre d'une ou plusieurs dizaines de mètres.

La liaison par fibres optiques autorise une température pouvant atteindre 350 ºC et le cas échéant, 400 ºC moyennant quelques précautions. De préférence, les sondes émettrices et réceptrices comportent un circuit auxiliaire 23 de balayage d'air frais, qui a pour but d'éviter les dépôts de matières solides sur l'extrémité 24 de la fibre optique.

Description de la régulation

La régulation a pour fonction d'optimiser la cuisson des anodes, c'est-à-dire d'imposer aux blocs carbonés et aux gaz une courbe de montée en température permettant à chaque phase de la cuisson de se dérouler dans les conditions optimales et ce, en réduisant au strict minimum la consommation de combustible, donc en optimisant le régime de combustion.

La température de cuisson suit une courbe de consigne, une régulation propre à chaque rampe de brûleurs, commande la fréquence et l'amplitude des injections de combustible dans les différents brûleurs (qui fonctionnent de façon intermittente. Ces injections s'effectuent par des impulsions de durée et de fréquence prédéterminées assignées par l'automate de la régulation. La température prise en compte pour cette régulation est la température des gaz mesurée après les brûleurs.

Le suivi de la mesure d'opacité des gaz dans la zone en préchauffage naturel permet de définir l'action sur la dépression de manière à régler les deux paramètres à la valeur optimale. Cette optimisation s'effectue en suivant en parallèle l'évolution de la température des gaz, par rapport à une courbe de consigne, dans la même zone. Un écart trop important par rapport à la température visée entraînera une modulation de l'action sur la dépression.

L'expérience montre en effet qu'une faible variation de la dépression entraîne une variation rapide et importante de la température des gaz dans la zone de préchauffage naturel.

La régulation qui prend en compte à la fois la variation de la température des gaz dans la zone en préchauffage naturel et les mesures d'opacité de ces gaz et de la dépression, selon un algorithme spécifique, agit sur le débit de gaz dans chaque ligne de cloison.

Il est donc nécessaire de disposer un volet motorisé 11 sur chacun des ajutages 2 reliant la pipe d'aspiration 3 aux ouvreaux de chaque chambre concernée.

Bien que, en théorie, chaque file de cloison chauffante 1 soit indépendante -et isolée- des autres files, l'expérience montre qu'une variation de la dépression dans une cloison 1 peut avoir des répercussions plus ou moins marquées sur la dépression dans les autres cloisons. De ce fait, il est préférable de ne pas asservir la dépression dans chaque cloison indépendamment de la dépression et de la température mesurée dans les autres cloisons de la chambre concernée, mais de les comparer entre elles et de les traiter selon un algorithme particulier, de façon à éviter toute variation brutale sur l'un quelconque des volets.

Un cycle de régulation peut, par exemple, se dérouler dans les conditions suivantes :

A) On initialise la dépression à une valeur comprise entre 0 et 250 Pa et plus particulièrement entre 40 et 180 Pa, par réglage du volet 1 et on laisse stabiliser la valeur d'opacité mesurée.

Puis de façon répétitive :

B) On scrute toute la gamme de dépression entre 0 et 250 Pa et plus particulièrement entre 40 et 180 Pa pour rechercher la dépression minimale X pour une opacité minimale Y des fumées, mesurée après une période de stabilisation d'au moins 30 secondes.

C) On règle la position du volet 11 de la pipe d'aspiration 3 pour une valeur de dépression située dans une plage X ± Δ X pour une opacité maintenue dans une plage Y ± Δ Y autour du minimum Y.

D) Parallèlement, on compare la courbe réelle de montée en température TG des gaz dans la zone en préchauffage naturel à une courbe de consigne. On régule autour d'une dépression minimale, correspondant à une opacité Y Minimale, de façon à maintenir la température TG des gaz dans la zone en préchauffage dans une plage T ± Δ T autour du point de consigne (une augmentation de la dépression entraînera une augmentation de la température des gaz).

En outre, on introduit une temporisation, lors d'une augmentation d'opacité en dehors de la plage Y ± Δ Y, de façon à ne revenir à la phase B que si l'opacité est toujours en dehors de cette plage à la fin de la période de temporisation.

Enfin, dans le cas défavorable où les mesures d'opacité Y et les mesures de température TG entraîneraient une action antagoniste sur le volet 1, l'opacité serait momentanément écartée, afin d'assurer prioritairement une élévation correcte de la température TG des gaz dans la zone en préchauffage naturel.

En outre, il est possible d'affiner encore l'optimisation de la combustion :

d'une part, en optimisant le débit de gaz comburant — c'est-à-dire d'air injecté par la pipe de soufflage 25, en agissant sur le débit du ventilateur 26, de façon à injecter la quantité d'oxygène nécessaire et suffisante pour assurer la combustion totale du combustible et des matières volatiles et à rester au minimum d'opacité des fumées ;

d'autre part, en agissant, par la régulation sur les volets d'obturation de la pipe de soufflage 25 (qui sont identiques aux volets 11 de la pipe d'aspiration et motorisés de la même façon), de façon à maintenir une surpression comprise entre 0,5 et 5 mm, et de préférence entre 1 et 2 mm de colonne d'eau (soit respectivement 4,9 à 49 Pa, de préférence 9,8 à 19,6 Pa, valeurs que l'on peut arrondir à 5 à 50 Pa, de préférence 10 à 20 Pa) dans les cloisons des chambres situées en arrière de la zone de plein feu (repère 27, figure 2). Eventuellement, on contrôle que ce réglage n'entraîne pas de baisse sensible de la température TG des gaz dans les cloisons concernées.

Pour obtenir ce résultat :

1) On dispose sur une des lignes d'ouvreaux de la chambre 27 précédant la zone de plein feu, une rampe 28 de déprimomètres comportant autant d'ajutages de mesures que le four comporte de cloisons (7 dans le cas évoqué), on fixe pour la surpression une valeur de consigne, par exemple 2 mm de CE (soit ≃ 20 Pa), on compte les valeurs mesurées à la valeur de consigne, et on agit sur les commandes motorisées des volets de réglage de la pipe de soufflage de façon à ramener la surpression à sa valeur de consigne.

2) On ajuste le débit d'air de combustion de la façon suivante : Le combustible mis en œuvre est constitué pour une première part par le gaz ou le fuel injecté dans les rampes de brûleurs 29. Cette injection est effectuée par impulsions calibrées, de fréquence et de durée assignées par le régulateur en fonction du programme de montée en température, chaque impulsion correspondant à une quantité prédéterminée de combustible. L'enregistrement du nombre et de la durée des impulsions permet donc de connaître la quantité de combustible injecté. L'autre part du combustible provient des matières volatiles émises par les blocs carbonés en cours de préchauffage : en effet, les blocs carbonés sont constitués d'un agrégat carboné et d'un liant qui est le plus souvent un brai.

La quantité de matières volatiles est connue de la façon suivante : on mesure la température TG des gaz dans les chambres en préchauffage naturel. Par modélisation mathématique (et vérification expérimentale), on a établi une courbe de corrélation entre la température TG des gaz de combustion qui circulent dans les cloisons et la température réelle TA des anodes dans les chambres en préchauffage naturel.

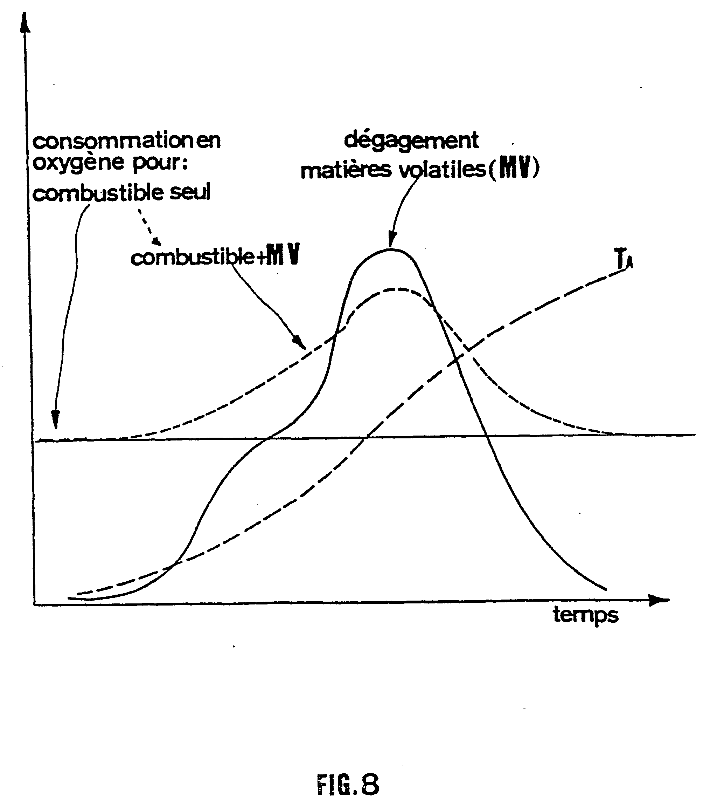

On a également établi, par modélisation mathématique et mesures expérimentales, la courbe de dégagement des matières volatiles en fonction de la température TA des anodes (fig. 8). Enfin, on a déterminé la teneur en C et H des matières volatiles, donc la quantité d'oxygène nécessaire pour brûler C en $CO_2$ et H en $H_2O$.

On peut donc ainsi, par mesure de la température TG et de la quantité de combustible injecté par unité de temps, déduire la quantité totale d'oxygène nécessaire pour assurer la combustion complète. Il suffit donc de régler le débit du ventilateur 26 tout en maintenant la surpression constante dans les cloisons des chambres situées en arrière de la zone de plein feu, pour l'ajuster en permanence à la quantité d'oxygène nécessaire pour obtenir une combustion optimale, confirmée par une opacité minimale des fumées, mesurée comme on l'a indiqué précédemment.

Exemple d'application

On a mis l'invention en application sur un four à chambres industriel, produisant des anodes pour une série de cuves d'électolyse fonctionnant sous 280 KA.

Ce four comporte 40 chambres réparties en 2 files parallèles. Chaque chambre comporte 6 alvéoles alternées avec 7 cloisons chauffantes. La chambre d'opacimétrie, montée en dérivation entre le premier et le troisième ouvreau, est un cylindre horizontal de 500 mm de diamètre et de 900 mm de long. Le diamètre des voies d'entrée 25A et de sortie 25B est de 100 mm (figure 6).

Les deux sondes sont disposées à environ 100 mm d'écartement et font, entre elles, un angle d'environ 80° (valeur indicative).

Les volets de réglage sont commandés par des vérins motorisés eux-mêmes pilotés à partir du coffret de régulation.

Les appareils de mesure de température (couples thermoélectriques) et de dépression sont classiques.

Les limites fixées pour les variations de la dépression sont 40 à 180 Pa avec initialisation à 80 Pa.

La surpression dans la dernière chambre en refroidissement naturel en amont de la zone de plein feu a été maintenue aux environs de 20 Pa. Après 6 mois de fonctionnement, on a noté une baisse de la consommation d'énergie de cuisson des anodes d'environ 15 à 16 %.

Parmi les autres avantages du procédé, on doit signaler :

l'automatisation pratiquement totale de la conduite du procédé de cuisson ;

la détection immédiate des incidents au niveau des brûleurs et des entrées d'air froid anormales ;

une diminution sensible des dimensionnements du système de traitement des gaz émis par le four ;

en outre, grâce au dosage précis de la quantité d'air de combustion injecté, on dispose d'une double action sur l'opacité : par réglage de la dépression sur les volets d'obturation 11 de la pipe d'aspiration 3 et par réglage du débit d'air injecté par le ventilateur de soufflage 26. On a donc de ce fait, très peu de risques d'avoir une combustion incomplète ;

on peut, enfin, prévoir à coup sûr, une augmentation de la durée de vie du four, ou plus précisément, un allongement des durées entre les opérations périodiques de réfection des chambres.

L'invention s'applique à la cuisson de tous les types de blocs carbonés : anodes et cathodes pour l'électrolyse de l'aluminium, électrodes cylindriques pour l'électrométallurgie, électrodes et autres pièces de forme destinées à être ultérieurement graphitées.

**Revendications**

1. Dispositif d'optimisation de la combustion dans un four à chambres dit à feu tournant, pour la cuisson de blocs carbonés, ce four comportant une pluralité de chambres de préchauffage, de cuisson et de refroidissement alignées en série, chaque chambre étant constituée par la juxtaposition, en alternance, de cloisons chauffantes creuses 1 dans lesquelles circulent les gaz de combustion et d'alvéoles 5 dans lesquelles sont empilés les blocs carbonés 6 à cuire, les gaz de combustion étant extraits par une pipe d'aspiration 3 reliée par des ajutages 2 à chacune des cloisons chauffantes 1 de la première chambre en préchauffage naturel, l'air nécessaire étant injecté par une pipe de soufflage 25 reliée à un ventilateur, ce dispositif étant caractérisé en ce que chaque ajutage 2 de la pipe d'aspiration est muni d'un volet d'obturation mobile 11 commandé par un moteur 12, d'un moyen de mesure de la température et de la dépression dans la cloison chauffante correspondante, d'un moyen 19, 20, 21 de mesure de l'opacité par réflexion de la fumée sortant de chaque cloison chauffante 1 et d'un moyen pour asservir la position du volet d'obturation 11 donc le débit dans chaque cloison 1 à la mesure combinée de l'opacité de la fumée, de la température et de la dépression.

2. Dispositif, selon revendication 1, caractérisé en ce qu'il comporte un moyen de réglage du débit du ventilateur 25 et un moyen de mesure de ce débit.

3. Dispositif, selon revendications 1 ou 2, caractérisé en ce qu'il comporte une rampe de déprimomètres 28 comportant autant d'ajutages de mesure que le four comporte de cloisons 1, disposé sur une des lignes d'ouvreaux de la chambre précédant la zone de plein feu.

4. Dispositif, selon revendications 1, 2 ou 3, caractérisé en ce que les ajutages de la pipe de soufflage 25 sont également munis de volets d'obturation mobiles commandés par un moteur.

5. Procédé d'optimisation de la combustion dans un four à chambres, selon revendication 1, caractérisé en ce que, dans le but de maintenir, d'une part la dépression dans les chambres du four à la valeur minimale compatible avec un régime optimal de la combustion, et d'autre part la température de la zone de préchauffage naturel à une valeur aussi proche que possible de la valeur de consigne :

A) On initialise la dépression à une valeur comprise entre 0 et 250 Pa et plus particulièrement entre 40 et 180 Pa, par réglage du volet 1 et on laisse stabiliser la valeur d'opacité mesurée.

Puis de façon répétitive :

B) On scrute toute la gamme de dépression entre 0 et 250 Pa et plus particulièrement entre 40 et 180 Pa pour rechercher la dépression minimale X pour une opacité Y des fumées, mesurée après une période de stabilisation d'au moins 30 secondes.

C) On règle la position de chaque volet 1 de la pipe d'aspiration 3 pour une valeur de dépression située dans une plage $X \pm \Delta X$ pour une opacité maintenue dans une plage $Y \pm \Delta Y$ autour du minimum Y.

D) Parallèlement, on compare la courbe réelle de montée en température des gaz dans la zone en préchauffage naturel à une courbe de consigne. On régule autour d'une dépression X minimale, correspondant à une opacité Y minimale, de façon à maintenir la température T des gaz dans la zone en préchauffage dans une plage $T \pm \Delta T$ autour du point de consigne.

6. Procédé selon revendication 5, caractérisé en ce que l'on introduit une temporisation, lors d'une augmentation d'opacité en dehors de la plage $Y \pm \Delta Y$, de façon à ne revenir à la phase B que si l'opacité est toujours en dehors de cette plage à la fin de la période de temporisation.

7. Procédé selon revendications 5 ou 6, caractérisé en ce que, dans le cas défavorable où les mesures d'opacité Y et les mesures de température T entraîneraient une action antagoniste sur le volet 1, l'opacité serait momentanément écartée, afin d'assurer prioritairement une élévation correcte de la température T des gaz dans la zone en préchauffage naturel.

8. Procédé selon l'une quelconque des revendications 5 à 7, caractérisé en ce que l'on règle en outre la surpression dans les cloisons des chambres 3 situées en arrière de la zone de plein feu à une valeur comprise entre 0,5 et 5 mm CE (soit sensiblement 5 à 50 Pa) et de préférence entre 1 et 2 mm CE (soit sensiblement 10 à 20 Pa).

9. Procédé, selon l'une quelconque des revendications 5 à 8, caractérisé en ce que l'on règle le débit du ventilateur 25 de façon à injecter, en permanence, la quantité d'air nécessaire et suffisante pour obtenir la combustion complète à la fois des matières volatiles dégagées au cours de la cuisson des blocs carbonés, et du combustible injecté dans les brûleurs 29.

10. Procédé selon revendication 9 caractérisé en ce que la quantité de matières volatiles dégagées par les blocs carbonés au cours de la cuisson est connue par mesure de la température TG des gaz dans les cloisons des chambres en préchauffage de laquelle on déduit par étalonnage préalable la température réelle TA des blocs carbonés, à laquelle on applique une fonction de corrélation entre TA et la quantité de matières volatiles dégagées, compte tenu de la teneur initiale en brai des blocs carbonés.

## Claims

1. Apparatus for optimising combustion in a chamber furnace referred to as a ring furnace, for baking carbonaceous blocks, said furnace comprising a plurality of preheating, baking and cooling chambers which are aligned in series, each chamber being formed by the alternating juxtaposition of hollow heating partitions 1 in which the combustion gases circulate and compartments 5 in which the carbonaceous blocks 6 to be baked are stacked, the combustion gases being extracted by a suction pipe 3 connected by delivery tubes 2 to each of the heating partitions 1 of the first natural preheating chamber, the necessary air being injected by a blowing pipe 25 connected to a fan 26 said apparatus being characterised in that each delivery tube 2 of the suction pipe is provided with a movable closure flap 11 controlled by a motor 12, a means for measuring the temperature and the depression in the corresponding partition, a means 19, 20, 21 for measuring the opacity, by reflection, of the fumes issuing from each heating partition 1, and a means for controlling the position of the closure flap 11 and therefore the flow rate in each partition 1 in dependence on the combined measurement of fume opacity, temperature and depression.

2. Apparatus according to claim 1 characterised in that it comprises a means for regulating the flow rate of the fan 26 and a means for measuring said flow rate.

3. Apparatus according to claim 1 or claim 2 characterised in that it comprises an array of depression-measuring devices 28 comprising as many measuring tubes as the furnace has partitions 1, disposed on one of the lines of port openings of the chamber preceding the full-firing zone.

4. Apparatus according to claim 1, claim 2 or claim 3 characterised in that the delivery tubes of the blowing pipe 25 are also provided with movable closure flaps controlled by a motor.

5. A process for optimising combustion in a chamber furnace according to claim 1 characterised in that, in order to maintain on the one hand the depression in the chambers of the furnace at the minimum value compatible with optimum combustion conditions, and on the other hand the temperature of the natural preheating zone at a value which is as close as possible to the reference value :

A) the depression is initialised at a value of between 0 and 250 Pa and more particularly between 40 and 180 Pa, by regulating the flap 1, and the measured opacity value is allowed to stabilise, and then repetitively :

B) the entire range of depression between 0 and 250 Pa and more particularly between 40 and 180 Pa is scanned to find the minimum depression X for a degree of opacity Y of the fumes, as measured after a period of stabilisation of at least 30 seconds,

C) the position of each flap 1 of the suction pipe 3 is regulated for a depression value which is in a range $X \pm \Delta X$ for a level of opacity which is maintained in a range $Y \pm \Delta Y$ around the minimum Y, and

D) in parallel therewith the real curve in respect of rise in temperature of the gases in the natural preheating zone is compared to a reference curve. The system is regulated around a minimum depression X corresponding to a minimum degree of opacity Y so as to maintain the temperature T of the gases in the preheating zone in a range $T \pm \Delta T$ around the reference point.

6. A process according to claim 5 characterised in that a time delay is introduced in the event of an increase in opacity outside of the range $Y \pm \Delta Y$ so as to return to phase B only if the opacity is still outside that range at the end of the delay period.

7. A process according to claims 5 or 6 characterised in that in the unfavourable situation where the opacity measurements Y and the temperature measurements T would result in an antagonistic action on the flap 1, opacity would be temporarily set aside in order to ensure as a priority factor a correct increase in the temperature T of the gases in the natural preheating zone.

8. A process according to any one of claims 5 to 7 characterised by further regulating the over pressure in the partitions of the chambers 3 which are disposed downstream of the full-firing zone to a value of between 0.5 and 5 mm WG (that is to say substantially 5 to 50 Pa) and preferably between 1 and 2 mm WG (that is to say substantially 10 to 20 Pa).

9. A process according to any one of claims 5 to 8 characterised by regulating the flow rate of the fan 26 so as permanently to inject the necessary amount of air which is sufficient to produce complete combustion both of the volatile materials given off in the course of baking of the carbonaceous blocks, and the fuel injected in the burners 29.

10. A process according to claim 9 characterised in that the amount of volatile materials given off by the carbonaceous blocks in the course of the baking operation is known by measuring the temperature TG of the gases in the partitions of the preheating chambers from which there is deduced by preliminary calibration the real temperature TA of the carbonaceous blocks, to which there is applied a correlation function as between TA and the amount of volatile materials given off, taking account of the initial pitch content of the carbonaceous blocks.

## Patentansprüche

1. Vorrichtung zur Optimierung des Brennens in einem Kammerofen, genannt mit drehendem Feuer, für das Brennen von kohlenstoffhaltigen Blöcken, wobei der Ofen eine Mehrzahl von Kammern des Vor- oder Aufheizens, des Brennens und des Abkühlens aufweist, die in Reihe angeordnet sind, wobei jede Kammer durch abwechselnd aneinanderliegende hohle Heiztrennwände (1), in denen die Verbrennungsgase zirkulieren, und Zellen (5) gebildet ist, in denen die zu brennenden kohlenstoffhaltigen Blöcke (6) aufgeschichtet sind, wobei die Verbrennungsgase durch ein Absaugrohr (3) abgezogen werden, das durch Ansatzrohre (2) mit jeder der Heiztrennwände (1) der ersten Kammer bei natürlicher Vorheizung verbunden sind, wobei die notwendige Luft durch ein Einblasrohr (25) eingeblasen wird, das mit einem Ventilator verbunden ist, wobei die Vorrichtung dadurch gekennzeichnet ist, daß jedes Ansatzrohr (2) des Absaugrohres mit einer beweglichen Abdeckkappe (11), die durch einen Motor (12) betätigt wird, einer Meßeinrichtung der Temperatur und des Unterdrucks in der zugehörigen Heiztrennwand, einer Meßeinrichtung (19, 20, 21) der Opazität durch Reflektion des aus jeder Heiztrennwand (1) austretenden Rauchs, und mit einer Einrichtung zum Steuern der Stellung der Abdeckkappe (11) und also der Rate in jeder Trennwand (1) für die kombinierte Messung der Rauchopazität, der Temperatur und des Unterdrucks, versehen ist.

2. Vorrichtung nach Anspruch 1, dadurch gekennzeichnet, daß sie eine Einrichtung zum Einstellen der Rate des Ventilators (26) und eine Meßeinrichtung dieser Rate aufweist.

3. Vorrichtung nach Anspruch 1 oder 2, dadurch gekennzeichnet, daß sie eine Rampe von Unterdruckmessern (28) aufweist, die so viele Meßverbindungen aufweist, wie der Ofen Trennwände (1) aufweist, die auf einer Linie von Öffnungen der Kammer angeordnet ist, die sich vor der Zone des vollen Feuers befindet.

4. Vorrichtung nach Anspruch 1, 2 oder 3, dadurch gekennzeichnet, daß die Ansatzrohre des Einblasrohrs (25) ebenfalls mit beweglichen, von einem Motor betätigten Abdeckkappen versehen sind.

5. Verfahren zur Optimierung des Brennens in einem Kammerofen, nach Anspruch 1, dadurch gekennzeichnet, daß in dem Ziel einerseits den Unterdruck in den Ofenkammern auf einem minimalen Wert zu halten, der verträglich ist mit einem optimalen Zustand der Verbrennung, und andererseits die Temperatur der natürlichen Vorheizzone auf einem Wert zu halten, der so nah wie möglich dem Anweisungswert liegt :

A) Initialisieren des Unterdrucks auf einen Wert zwischen 0 und 250 Pa und genauer zwischen 40 und 180 Pa, durch Einstellung der Kappe (1) und Stabilisieren lassen des gemessenen Opazitätswertes ;

B) Absuchen des gesamten Bereichs des Unterdrucks zwischen 0 und 250 Pa und genauer zwischen 40 und 180 Pa, um den minimalen Unterdruck X für eine Opazität Y des Rauchs zu ermitteln, der nach einer Stabilisierungsperiode von wenigstens 30 Sekunden gemessen wurde ;

C) Regeln der Position einer jeden Kappe (1) des Ansaugrohres (3) für einen Unterdruckwert, der im Bereich X ± Δ X für eine Opazität angeordnet ist, die in einem Bereich Y ± Δ Y um das Minimum Y gehalten wird ;

D) Parallel Vergleichen der tatsächlichen Anstiegskurve der Temperatur der Gase in der Zone der natürlichen Vorheizung mit einer vorgegebenen Kurve ; Regeln bzw. Konstanthalten um einen minimalen Unterdruck X, entsprechend einer minimalen Opazität Y derart, um die Temperatur T der Gase in der Zone des Vorheizens in einem Bereich T ± Δ T um den angewiesenen oder vorgewählten Punkt beizubehalten.

6. Verfahren nach Anspruch 5, dadurch gekennzeichnet, daß eine Verweilzeit eingeführt wird, während eines Anstiegs der Opazität außerhalb des Bereichs Y ± Δ Y, derart, um nur in die Phase B zurückzukommen, wenn die Opazität sich noch außerhalb dieses Bereiches am Ende der Verweilzeitperiode befindet.

7. Verfahren nach Anspruch 5 oder 6, dadurch gekennzeichnet, daß im ungünstigen Fall, wo die Messung der Opazität Y und die Messungen der Temperatur T eine gegensätzliche Einwirkung auf die Kappe (1) mit sich bringen würden, die Opazität momentan ausgespart wird, um vornehmlich eine korrekte Anhebung der Temperatur T der Gase in der Zone unter natürlicher Vorheizung sicherzustellen.

8. Verfahren nach einem der Ansprüche 5 bis 7, dadurch gekennzeichnet, daß weiterhin der Überdruck in den Trennwänden der Kammern (3) geregelt wird, die hinter der Zone des vollen Feuers sich befinden, auf einen Wert zwischen 0,5 und 5 mmHg (ungefähr 5 bis 50 Pa) und vorzugsweise zwischen 1 und 2 mmHg (im wesentlichen 10 bis 20 Pa) einzustellen.

9. Verfahren nach einem der Ansprüche 5 bis 8, dadurch gekennzeichnet, daß die Rate des Ventilators (26) derart eingestellt wird, daß ständig die notwendige und ausreichende Luftmenge eingeblasen wird, um eine vollständige Verbrennung sowohl der flüchtigen Materialien, die während des Brennens der kohlenstoffhaltigen Blöcke losgelöst werden als auch des eingespritzten Brennstoffs in die Brenner (29), zu erreichen.

10. Verfahren nach Anspruch 9, dadurch gekennzeichnet, daß die Menge der von den kohlenstoffhaltigen Blöcken losgelösten flüchtigen Materialien während des Brennens durch Messen der Temperatur TG der Gase in den Trennwänden der Kammern beim Vorheizen ermittelt wird, von der durch vorhergehende Eichung die reelle Temperatur TA der kohlenstoffhaltigen Blöcke abgeleitet wird, auf die eine Korrelationsfunktion zwischen TA und der Menge der flüchtigen losgelösten Materialien aufgebracht wird, unter Berücksichtigung des Ausgangsgehalts an Pech der kohlenstoffhaltigen Blöcke.

**FIG.1**

**FIG.2**

**ZONES DE**     **AMONT**

enfournement

(réparation)

défournement

FIG.3

refroidissement
forcé

26

pipe de
soufflage

25

refroidissement
naturel

sens
d'avance
du feu

27   28

déprimomètre

plein feu

rampe de
bruleurs

préchauffage
forcé

29

préchauffage
naturel

3

opacimètre

7

pipe d'aspiration

traitement fumées

FIG.4

FIG.5

FIG. 6

FIG. 7

FIG.8